# EUROPÄISCHE PATENTANMELDUNG

(11) **EP 4 623 774 A1**
(43) Veröffentlichungstag der Anmeldung: **01.10.2025**
(21) Anmeldenummer: 24167679.0
(22) Anmeldetag: 28.03.2024
(51) Int. Cl.: A47K 3/28, B32B 15/08, B32B 15/20, E04C 2/52, F24D 3/14, F24D 13/02, H05B 3/26

(54) **VERWENDUNG EINER WANDVERKLEIDUNG IN EINER NASSZELLE**

(71) Anmelder: Roth Werke GmbH, 35232 Dautphetal (DE)
(72) Erfinder:
(74) Vertreter: Andrejewski - Honke Patent- und Rechtsanwälte Partnerschaft mbB

(57) **Zusammenfassung**

Verwendung einer Wandverkleidung (1) in einer Nasszelle, wobei die Wandverkleidung (1) wenigstens ein Paneel (2a, 2b) umfasst, wobei das Paneel (2a, 2b) eine Trägerschicht (3) umfasst, wobei die Trägerschicht (3) einen Kunststoff aufweist, wobei die Wandverkleidung (1) ein Heizelement (4) umfasst, wobei das Paneel (2) wenigstens eine Schutzschicht (5) aufweist, wobei die Schutzschicht (5) raumeinwärts der Trägerschicht (3) angeordnet ist, wobei das Heizelement (4) an einer raumauswärtigen Seite des Paneels (2a, 2b) anliegt, dadurch gekennzeichnet, dass die Schutzschicht (5) ein Metall und insbesondere Aluminium umfasst.

## Beschreibung

Die Erfindung betrifft die Verwendung einer Wandverkleidung in einer Nasszelle, wobei die Wandverkleidung wenigstens ein Paneel umfasst, wobei das Paneel eine Trägerschicht umfasst, wobei die Trägerschicht einen Kunststoff aufweist, wobei die Wandverkleidung ein Heizelement umfasst, wobei das Paneel wenigstens eine Schutzschicht aufweist, wobei die Schutzschicht raumeinwärts der Trägerschicht angeordnet ist, wobei das Heizelement an einer raumauswärtigen Seite des Paneels anliegt.

Eine derartige Verwendung einer Wandverkleidung ist aus DE 10 2005 015 050 A1 bekannt, welche tapeten- bzw. streifenartig ausgebildet und für die Installation an, beispielsweise, Badwänden geeignet ist. Demnach umfasst die bekannte Wandverkleidung bzw. der Streifen im Kern eine elektrische Heizschicht, welche von zwei Kunststoffschichten umschlossen ist. Eine erste Kunststoffschicht ist zwischen der Heizschicht und der Wand befindlich, während die zweite Kunststoffschicht zwischen der Heizschicht und dem Rauminneren angeordnet ist. Eine erste Spinnvliesschicht ist zwischen der ersten Kunststoffschicht und der Wand angeordnet, während eine zweite Spinnvliesschicht die Wandverkleidung zum Rauminneren hin abschließt.

Die bekannte Wandverkleidung aus DE 10 2005 015 050 A1 umfasst demnach fünf miteinander verbundene Schichten, welche ein flächiges Verbundelement bilden. Die dem Rauminneren zugewandte Schicht des Verbundelements oder Paneels ist die innerste Schicht, wohingegen die der Wand zugewandte Schicht die äußerste Schicht ist. Das flächige Verbundelement wird mittels eines üblichen Bauklebers an der Wand befestigt. Danach werden elektrische Zuleitungen der Wandverkleidung bereichsweise freigelegt und mit elektrischen Anschlussleitungen verbunden. Zuletzt werden die freigelegten Bereiche isoliert und abgedichtet. Abgedichtet werden auch die Stirnseiten des Streifens bzw. der Wandverkleidung.

Allerdings ist die bekannte Wandverkleidung nur bedingt für den Duschbereich geeignet, in welchem regelmäßig Wasser auf die Außenseite der Wandverkleidung gelangt. Denn nach Jahren und Jahrzehnten wird die äußere Kunststoffschicht - insbesondere in Duschen - langsam aber sicher spröde und rissanfällig. Der Erfindung liegt daher die Aufgabe zugrunde, eine Wandverkleidung zu schaffen, welche noch besser für den Duschbereich geeignet ist und eine noch größere Robustheit bietet.

Diese Aufgabe wird gelöst durch eine Verwendung gemäß Anspruch 1.

Der Erfindung liegt die Erkenntnis zugrunde, dass ein Metall eine ausreichend hohe Stabilität gewährleistet, um die Trägerschicht gegenüber den jahrelangen Einflüssen einer Duschumgebung zu schützen. Das Metall bietet zum einen eine ausreichend hohe Duktilität und gleichzeitig eine ausreichende Festigkeit, um insbesondere versehentlichen Krafteinwirkungen - etwa durch einen Fenstergriff oder durch eine Kante einer Duschwand oder einer Duscharmatur während der Installation - widerstehen zu können. Hierdurch wird die Robustheit bzw. durchschnittliche Langlebigkeit der Wandverkleidung deutlich erhöht und die eingangs genannte Aufgabe gelöst.

Der Begriff "Wandverkleidung" meint vorzugsweise eine Verkleidung, welche für Seitenwände, Decken und/oder Fußböden eines Raums in einem Gebäude geeignet ist. Besonders vorzugsweise ist die Wandverkleidung für die Seitenwände eines Raums und insbesondere einer Nasszelle geeignet.

Der Ausdruck "Nasszelle" meint vorzugsweise sämtliche Räume eines Gebäudes, welche Wassereinlässe und/oder Wasserauslässe aufweisen. Hierzu gehören beispielsweise Badezimmer, Küchen, Hallenbäder oder dergleichen. Die Wandverkleidung kann in privaten und/oder öffentlichen Gebäuden angeordnet sein. Öffentliche Gebäude sind beispielsweise Hallenbäder oder Wellnesseinrichtungen aller Art.

Der Ausdruck "raumeinwärts" bezieht sich vorzugsweise auf einen gedachten Mittelpunkt eines Raums, von welchem eine senkrechte, gedachte Linie zur jeweiligen Wand verläuft. Diese gedachte Linie durchläuft, ausgehend von dem Raummittelpunkt, zunächst die am weitesten raumeinwärts liegende Schicht des Paneels und zuletzt die am weitesten raumauswärts liegende Schicht des Paneels.

Der Begriff "Paneel" meint vorzugsweise ein flächiges Bauelement. Es ist bevorzugt, dass das Paneel eine Ausdehnung in Tiefenrichtung, eine Ausdehnung in Längsrichtung sowie eine Ausdehnung in Breitenrichtung aufweist. Die Ausdehnung des Paneels in Tiefenrichtung entspricht zweckmäßigerweise einer Wandstärke des Paneels. Es ist somit möglich, dass die Tiefenrichtung sich im Falle eines an einer Decke angeordneten Paneels in Höhenrichtung erstreckt. Die Tiefenrichtung erstreckt sich vorzugsweise entlang einer Flächennormalen einer Wand des Raums, an welcher die Wandverkleidung bzw. das Paneel angebracht ist.

Eine Ausdehnung in Längsrichtung bzw. die Längsausdehnung des Paneels wird bevorzugt vorgegeben durch die größte Ausdehnung des Paneels in einer Raumrichtung. Die Breitenrichtung ist vorzugsweise senkrecht zu der Tiefenrichtung und vorzugsweise senkrecht zu der Längsrichtung bzw. Längsausdehnung. Ist ein Paneel bzw. eine Wandverkleidung an einer Seitenwand eines Raums angeordnet, so entspricht die Längsausdehnung des Paneels vorzugsweise einer Höhenausdehnung des Paneels. Es ist bevorzugt, dass das Paneel eine Ausdehnung in Breitenrichtung von höchstens 3,0m bzw. 2,5m bzw. 2,0 m bzw. 1,8 m bzw. 1,6 m aufweist. Mit Vorteil beläuft sich eine Ausdehnung in Breitenrichtung auf wenigstens 0,5 m bzw. 0,75 m bzw. 1,0 m.

Gemäß einer besonders bevorzugten Ausführungsform ist die Nasszelle ein Badezimmer. Vorzugsweise ist die Wandverkleidung in/an einer Sanitäranlage des Badezimmers und insbesondere in einer Dusche oder an einer Badewanne installiert. Dies bewirkt, dass die Wärme des Heizelements besonders zielgerichtet an die Umgebung und insbesondere im Bereich einer Dusche oder einer Badewanne abgegeben wird. Hierdurch wird der Komfort deutlich erhöht und außerdem ein für den Menschen schnell spürbarer Effekt erzielt. Die Wandverkleidung ist vorzugsweise an wenigstens einer Wand und weiter vorzugsweise an wenigstens zwei Wänden einer Nasszelle bzw. einer Sanitäranlage installiert. Die Wandverkleidung kann an einer Seitenwand der Badewanne selbst installiert sein. Gemäß einer Ausführungsform ist die Wandverkleidung an einer Wand der Nasszelle oberhalb der Badewanne angeordnet. Es ist möglich, dass die Wandverkleidung am Fußboden und/oder an der Decke angebracht ist. Es ist möglich, dass die Wandverkleidung an einer Seitenwand in einem Hallenbad oder einer Sauna oder einer Wellnesseinrichtung installiert ist. Gemäß der am meisten bevorzugten Ausführungsform ist die Wandverkleidung in einer Dusche bzw. Duschkabine installiert. Mit Vorteil erstreckt sich die Wandverkleidung auf wenigstens einer Wand der Dusche.

Vorteilhafterweise umfasst die Wandverkleidung eine erste Seitenwand und vorzugsweise eine zweite Seitenwand. Die erste Seitenwand der Wandverkleidung ist zweckmäßigerweise auf der ersten Wand der Nasszelle angeordnet. Die zweite Seitenwand der Wandverkleidung ist zweckmäßigerweise auf der zweiten Wand der Nasszelle angeordnet. Die erste Seitenwand umfasst vorzugsweise ein erstes Paneel. Die zweite Seitenwand umfasst vorzugsweise ein zweites Paneel. Das erfindungsgemäße Paneel kann das erste Paneel sein.

Das zweite Paneel umfasst - zweckmäßigerweise analog zum ersten Paneel - vorzugsweise eine Trägerschicht. Es ist bevorzugt, dass die Trägerschicht des zweiten Paneels einen Kunststoff aufweist. Die Wandverkleidung bzw. die zweite Seitenwand umfasst vorzugsweise ein zweites Heizelement. Das zweite Heizelement ist mit Vorteil an einer raumauswärtigen Seite des zweiten Paneels anliegend angeordnet. Das zweite Paneel umfasst mit Vorteil eine Schutzschicht, welche insbesondere raumeinwärts an der Trägerschicht des zweiten Paneels angeordnet ist. Es ist bevorzugt, dass die Schutzschicht des zweiten Paneels ein Metall und insbesondere Aluminium umfasst. Das zweite Paneel umfasst vorzugsweise wenigstens ein Merkmal des ersten Paneels. Es ist möglich, dass das zweite Paneel bzw. die zweite Seitenwand sämtliche Merkmale des ersten Paneels bzw. der ersten Seitenwand aufweist. Vorzugsweise sind die Begriffe "Paneel", "erstes Paneel" und "zweites Paneel" austauschbar.

Es ist sehr bevorzugt, dass die Wandverkleidung eine Nische aufweist. Es von Vorteil, dass die Nische in dem Paneel bzw. in dem ersten Paneel bzw. in dem zweiten Paneel eingearbeitet ist. Es ist möglich, dass die erste Seitenwand und/oder die zweite Seitenwand eine Vorwandmontage aufweist. Mit Vorteil ist die Nische als Abstellplatz für kosmetische Produkte ausgebildet. Die Nische erhöht die Funktionalität der Wandverkleidung und vergrößert zugleich die Bautiefe der Wandverkleidung. Dies ermöglicht die Anordnung eines Heizelements in Form einer hydraulischen Heizeinrichtung. Die Nische umfasst zweckmäßigerweise einen Nischenboden und/oder eine Nischendecke und/oder wenigstens eine Nischenseitenwand und vorzugsweise zwei Nischenseitenwände und/oder eine Nischenrückwand.

Es ist vorteilhaft, dass die Nischenseitenwände, der Nischenboden, die Nischendecke und die Nischenrückwand Bestandteile eines Nischenkastens sind. Der Nischenkasten ist vorzugsweise einstückig und insbesondere integral ausgebildet. Der Nischenkasten kann einen Kunststoff und/oder ein Metall umfassen. Zweckmäßigerweise ist der Nischenkasten an einer Seite offen ausgebildet. Es ist möglich, dass aus dem Paneel eine Öffnung heraus geschnitten ist, welche von dem Nischenkasten geschlossen wird. Zweckmäßigerweise korrespondiert die offene Seite des Nischenkastens mit der Öffnung des Paneels bzw. ersten Paneels bzw. zweiten Paneels. Es ist möglich, dass der Nischenkasten auf eine/die Rückseite des Paneels bzw. ersten Paneels bzw. zweiten Paneels geklebt ist. Mit Vorteil weist der Nischenkasten an der offenen Seite einen wenigstens teilweise umlaufenden Flansch - insbesondere zur Verklebung mit dem Paneel - auf. Der Nischenkasten kann durch Spritzguss oder Blasformen oder Thermoformen oder Tiefziehen hergestellt sein. Es ist besonders bevorzugt, dass ein ausgeschnittener Abschnitt von der Öffnung des Paneels wenigstens teilweise an einer Vorderseite der Nischenrückwand angeordnet und insbesondere festgeklebt ist. Gemäß einer bevorzugten Ausführungsform umfasst der Nischenkasten ein Metall und insbesondere ein Stahlblech oder Aluminium. Das Stahlblech kann verzinkt sein. Der Nischenkasten kann mittels Tiefziehen geformt sein. Hierdurch wird eine hohe Präzision in der Fertigung erreicht.

Vorteilhafterweise umfasst die Wandverkleidung bzw. das Paneel bzw. das erste Paneel bzw. das zweite Paneel bzw. die erste Seitenwand bzw. die zweite Seitenwand wenigstens einen Seitenflügel und einen Hauptabschnitt. Es ist bevorzugt, dass der wenigstens eine Seitenflügel und der Hauptabschnitt in einem Querschnitt des Paneels bzw. der Wandverkleidung einen Winkel und insbesondere einen rechten Winkel bilden. Der Seitenflügel bewirkt, dass die Wandverkleidung im Falle einer größeren Bautiefe - beispielsweise aufgrund einer Nische - zur Seite hin abgeschlossen wird, was eine Dichtheitsfunktion sowie auch eine ästhetische Funktion erfüllt. Es ist besonders bevorzugt, dass das Paneel bzw. das erste Paneel bzw. das zweite Paneel wenigstens eine Knickkante zur Definition des Seitenflügels und des Hauptabschnitts aufweist. Die Knickkante umfasst vorzugsweise auf einer Rückseite des Paneels/ersten Paneels/zweiten Paneels eine die Knickkante bildende Nut. Die Nut ermöglicht ein leichtes Umknicken des Seitenflügels im Verhältnis zum Hauptabschnitt.

Es ist bevorzugt, dass eine Ausdehnung des Seitenflügels in Tiefenrichtung größer oder gleich einer Ausdehnung der Nische in Tiefenrichtung ist. Es ist von Vorteil, dass eine Ausdehnung der Nische in Tiefenrichtung höchstens um 30 bzw. 20 bzw. 15 bzw. 10mm geringer ist als eine Ausdehnung des wenigstens einen Seitenflügels in Tiefenrichtung. Mit Vorteil erstreckt sich der wenigstens eine Seitenflügel über die volle Länge bzw. Höhe des Paneels/ersten Paneels/zweiten Paneels. Es ist bevorzugt, dass die Nische an dem Hauptabschnitt angeordnet ist. Es ist von Vorteil, dass der Hauptabschnitt wenigstens eine Armaturöffnung und vorzugsweise zwei Armaturöffnungen für einen Kaltwasseranschluss und einen Warmwasseranschluss aufweist. Die Armaturöffnungen können insbesondere kreisförmig ausgebildet sein. Die Wandverkleidung bzw. die erste Seitenwand bzw. die zweite Seitenwand bzw. das erste Paneel bzw. das zweite Paneel kann einen zweiten Seitenflügel aufweisen. Der zweite Seitenflügel kann ein Merkmal des ersten Seitenflügels und insbesondere sämtliche Merkmale des ersten Seitenflügels aufweisen.

Gemäß einer besonders bevorzugten Ausführungsform weist die Wandverkleidung bzw. die erste Seitenwand bzw. die zweite Seitenwand wenigstens einen Abstandshalter zwischen dem Paneel und einer Wand der Nasszelle auf. Dies bewirkt eine größere Stabilität des Paneels bzw. der Wandverkleidung im Falle eines Abstands zwischen dem Paneel und der Wand der Nasszelle. Der Abstandshalter umfasst vorzugsweise eine dem Paneel zugewandte Paneelfläche und eine der Wand der Nasszelle zugewandte Wandfläche. Die Paneelfläche und die Wandfläche sind vorzugsweise in einem Querschnitt und/oder einem Längsschnitt des Abstandshalters parallel zueinander ausgebildet. Es ist bevorzugt, dass der Abstandshalter sich entlang von wenigstens 5 bzw. 10 bzw. 15 bzw. 20 cm in Breitenrichtung des Paneels / ersten Paneels / zweiten Paneels erstreckt. Vorzugsweise erstreckt sich der Abstandshalter entlang der gesamten Breite des Paneels bzw. ersten Paneels bzw. zweiten Paneels. Der Abstandshalter umfasst vorzugsweise einen Kunststoff, insbesondere einen geschäumten Kunststoff und besonders vorzugsweise ein Styropor. Es ist bevorzugt, dass der Abstandshalter mit seiner Paneelfläche auf eine Rückseite des Paneels/ersten Paneels/ zweiten Paneels geklebt ist. Vorzugsweise ist der Abstandshalter mit seiner Paneelfläche auf eine Rückseite des Paneels/ersten Paneels/ zweiten Paneels geklebt.

Es ist ganz besonders bevorzugt, dass eine Ausdehnung des Abstandshalters in Tiefenrichtung einer Ausdehnung des wenigstens einen Seitenflügels in Tiefenrichtung entspricht. Es ist sehr bevorzugt, dass der wenigstens eine Seitenflügel an einem Stirnende des Abstandshalters anliegt und vorzugsweise mit dem Stirnende des Abstandshalters verklebt ist. Vorzugsweise umfasst die Wandverkleidung wenigstens zwei und weiter vorzugsweise wenigstens drei Abstandshalter. Mit Vorteil ist wenigstens einer der Abstandshalter an einem unteren Ende des Paneels / ersten Paneels / zweiten Paneels angeordnet. Vorzugsweise ist mindestens ein Abstandshalter an einem oberen Ende des Paneels / ersten Paneels / zweiten Paneels befindlich. Es ist möglich, dass wenigstens ein Abstandshalter in einem mittleren Drittel in Höhenrichtung bzw. Längsrichtung des Paneels / ersten Paneels / zweiten Paneels und vorzugsweise zwischen einer/der Nische und dem Heizelement angeordnet ist.

Vorzugsweise ist das Heizelement - insbesondere die hydraulische Heizeinrichtung - in zwei unteren Dritteln bzw. in einer unteren Hälfte bzw. in einem unteren Drittel der Wandverkleidung bzw. des Paneels/ersten Paneels/zweiten Paneels angeordnet. Dies bietet Platz auf der Rückseite des Paneels für die Nische bzw. die Armatur bzw. die Armaturöffnungen bzw. für den Abstandshalter. Es wurde erkannt, dass das Heizelement sowohl in Form der elektrischen Heizeinrichtung als auch in Form der hydraulischen Heizeinrichtung ausreichend stark ist, wenn lediglich ein unteres Drittel des Paneels von dem elektrischen Heizelement eingenommen wird. Vorzugsweise ist das elektrische Heizelement lediglich in den unteren Dreivierteln bzw. in den unteren Zweidritteln bzw. in der unteren Hälfte des Paneels/ersten Paneels /zweiten Paneels angeordnet.

Es ist bevorzugt, dass die Wandverkleidung bzw. das Paneel bzw. das erste Paneels bzw. das zweiten Paneels eine Höhe bzw. Länge von wenigstens 1,0 bzw. 1,2 bzw. 1,5 bzw. 1,7 m aufweist. Hierdurch wird ein ausreichend großer Teil der Wand der Nasszelle von der Wandverkleidung im Bereich einer Badewanne oder einer Dusche bedeckt, sodass den Anforderungen an die Dichtheit und der Ästhetik entsprochen wird. Mit Vorteil entspricht die Länge des Paneels bzw. des ersten Paneels bzw. des zweiten Paneels einer Höhe / Länge der Wandverkleidung bzw. der ersten Seitenwand bzw. der zweiten Seitenwand.

Gemäß einer besonders vorteilhaften Ausführungsform ist das Paneel bzw. das erste Paneel bzw. das zweite Paneel einstückig ausgebildet. Der Begriff "einstückig" meint vorzugsweise, dass ein einstückiger Körper lediglich auf zerstörende Art, beispielsweise durch Schneiden oder Stanzen, irreversibel in mehrere Stücke geteilt werden kann. Im Gegensatz hierzu ist beispielsweise das Lösen einer Schraubverbindung aus Schraube und Mutter ein reversibler Vorgang, sodass die Schraubverbindung nicht einstückig, sondern mehrstückig ausgebildet ist. Ein einstückiger Körper kann beispielsweise durch das Zusammenschweißen oder durch das Zusammenkleben zweier Körper entstehen. Der Ausdruck "integral ausgebildet" meint vorzugsweise einen einstückigen Körper, der aus einer einzigen Schmelze heraus entstanden ist und dann lediglich noch Umformungen und/oder subtraktive Behandlungen erfahren musste. Beispielsweise ein durch Spritzguss erzeugter Körper ist ein integral ausgebildeter Körper. Ein anderer, beispielhafter integral ausgebildeter Körper ist ein einschichtiges Rohr, welches durch Extrusion hergestellt wurde. Demgegenüber ist ein mehrschichtiges, durch Koextrusion hergestelltes Rohr zwar einstückig, aber nicht integral ausgebildet, weil die Rohrschichten unterschiedlichen Schmelzen entstammen und daher einander verbindende Grenzflächen aufweisen. Demgegenüber sind die einzelnen Schichten des koextrudierten Rohrs integral ausgebildet.

Besonders vorzugsweise ist die Trägerschicht und/oder die Schutzschicht und/oder die Sicherungsschicht entlang eines Querschnitts von einem unteren Ende bzw. von einem ersten Längsende des Paneels bis zu einem oberen Ende bzw. zu einem zweiten Längsende des Paneels einstückig und vorzugsweise integral ausgebildet. Dies bewirkt eine gleichmäßige und fluiddichte Oberfläche und bietet eine entsprechende Langlebigkeit. Vorzugsweise ist die Schutzschicht an der Trägerschicht anliegend und bevorzugt mit der Trägerschicht thermisch verbunden. Gemäß einer Ausführungsform kann die Schutzschicht/Sicherungsschicht mit der Trägerschicht verklebt sein.

Gemäß einer sehr bevorzugten Ausführungsform umfasst das Paneel bzw. das erste Paneel bzw. das zweiten Paneel eine Sicherungsschicht. Vorteilhafterweise umfasst die Sicherungsschicht ein Metall und insbesondere Aluminium. Dies dient dem Schutz der Trägerschicht. Vorzugsweise ist die Sicherungsschicht auf einer raumauswärtigen Seite der Trägerschicht angeordnet. Zweckmäßigerweise ist die Sicherungsschicht an der Trägerschicht anliegend und bevorzugt mit der Trägerschicht thermisch verbunden. Vorzugsweise umfasst die Schutzschicht/Sicherungsschicht wenigstens 50 bzw. 70 bzw. 90 bzw. 95 % Aluminium.

Gemäß einer bevorzugten Ausführungsform weist die Wandverkleidung ein Befestigungselement zur Befestigung des Paneels / ersten Paneels / zweiten Paneels an einer ersten bzw. zweiten Wand der Nasszelle auf. Vorzugsweise ist das Befestigungselement als Paneelprofil ausgebildet. Dies ermöglicht die Befestigung des Paneels bzw. der Wandverkleidung, wenn die Wandverkleidung eine größere Bautiefe aufweist bzw. wenn ein Abstand zwischen dem Paneel und der Wand der Nasszelle vorgesehen ist. Insbesondere ermöglicht dies eine Befestigung des Paneels an einer Wand der Nasszelle auf Stoß bzw. die Verbindung einer Stirnkante des Paneels mit der Wand der Nasszelle. Vorzugsweise umfasst das Befestigungselement eine Paneelaufnahme zur Aufnahme des Paneels. Die Paneelaufnahme kann in einem Querschnitt des Befestigungselements etwa U-förmig ausgebildet sein. Besonders vorzugsweise erstreckt sich die Paneelaufnahme entlang wenigstens eines Viertels bzw. Drittels bzw. der Hälfte bzw. von zwei Dritteln bzw. von drei Vierteln und vorzugsweise entlang der vollständigen Länge bzw. Höhe des Paneels. Es ist bevorzugt, dass das Befestigungselement wenigstens eine Fixierung umfasst. Die Fixierung kann insbesondere eine Schraubverbindung aufweisen, die das Befestigungselement mit einer Wand der Nasszelle verbindet. Es ist sehr bevorzugt, dass das Befestigungselement den wenigstens einen Seitenflügel der Wandverkleidung bzw. der ersten Seitenwand bzw. der zweiten Seitenwand bzw. des ersten Paneels bzw. des zweiten Paneels mit einer Wand der Nasszelle verbindet.

Vorteilhafterweise beträgt eine Schichtdicke der Trägerschicht höchstens 20 bzw. 15 bzw. 10 bzw. 8 mm. Es ist bevorzugt, dass eine Schichtdicke der Trägerschicht wenigstens 1,0 bzw. 1,5 mm bzw. 2,0 mm bzw. 2,5 mm beträgt. Dies ermöglicht einerseits ausreichend Stabilität und andererseits eine akzeptable Handhabbarkeit bzw. Transportierbarkeit der Wandverkleidung. Es ist sehr bevorzugt, dass ein auf die Wand der Nasszelle aufgeklebtes Paneel dünner ist als ein Paneel mit Abstand zur Wand der Nasszelle. Wenn das Paneel einen Abstand zur Wand der Nasszelle bzw. die Seitenwand eine Vorwandmontage aufweist, so beträgt die Schichtdicke der Trägerschicht wenigstens 3,0 bzw. 4,0 bzw. 4,5 bzw. 5,0 mm. Es ist von Vorteil, dass der Kunststoff der Trägerschicht ein Polyolefin, vorzugsweise ein Polyethylen und insbesondere ein LDPE umfasst.

Es ist sehr bevorzugt, dass eine Schichtdicke der Schutzschicht und/oder der Sicherungsschicht höchstens 2,0 bzw. 1,0 bzw. 0,5 mm beträgt. Mit Vorteil beläuft sich eine Schichtdicke der Schutzschicht und/oder der Sicherungsschicht auf wenigstens 0,05 bzw. 0,10 bzw. 0,15 bzw. 0,20 bzw. 0,25 mm. Hierdurch wird ein belastbarer Überzug geschaffen, sodass ein durchgängiger Überzug der Trägerschicht auch bei Biegungen oder Kratzern gewährleistet ist und gleichzeitig eine ausreichende Stabilität bietet.

Mit Vorteil weist das Paneel eine Dekorschicht auf, wobei die Dekorschicht raumeinwärts der Schutzschicht angeordnet ist. Die Dekorschicht umfasst vorzugsweise einen Farbdruck. Hierdurch wird die Funktion der Ästhetik in die Wandverkleidung integriert, sodass ein größtmögliches Wohlbehagen in der Nasszelle erreicht werden kann.

Vorzugsweise umfasst das Paneel bzw. das erste bzw. zweite Paneel eine Grundierungsschicht, wobei die Grundierungsschicht bevorzugt auf der Schutzschicht aufgetragen ist. Es ist bevorzugt, dass die Dekorschicht auf der Grundierungsschicht der Schutzschicht aufgetragen ist. Die Grundierungsschicht bietet eine gute Haftung und einen Farbuntergrund für die Dekorschicht. Es ist möglich, dass das Paneel eine Grundierungsschicht umfasst, welche bevorzugt auf der Sicherungsschicht aufgetragen ist.

Mit Vorteil weist das Paneel eine Grundlackschicht auf, wobei die Grundlackschicht raumeinwärts der Schutzschicht und bevorzugt raumeinwärts der Dekorschicht angeordnet ist. Es ist von Vorteil, dass die Grundlackschicht auf der Dekorschicht aufgetragen ist. Die Grundlackschicht umfasst vorzugsweise einen Lack und insbesondere einen transparenten Lack. Die Grundlackschicht bietet eine große Abriebfestigkeit des Paneels zum Schutz der Dekorschicht.

Vorzugsweise umfasst das Paneel eine Deckschicht. Die Deckschicht ist vorteilhafterweise raumeinwärts der Grundlackschicht angeordnet und insbesondere auf der Grundlackschicht aufgetragen. Die Deckschicht ermöglicht insbesondere eine wünschenswerte Optik und/oder Haptik der Oberfläche des Paneels und ist für Glanzeffekte oder eine matte Erscheinung und/oder eine Prägung für die Haptik verantwortlich.

Gemäß einer bevorzugten Ausführungsform umfasst das Heizelement eine elektrische Heizeinrichtung und insbesondere eine elektrische Flächenheizung und zweckmäßigerweise wenigstens zwei elektrische Anschlüsse. Hierdurch entsteht ein verhältnismäßig geringer Herstellungs- und Installationsaufwand. Insbesondere kann auf diese Weise eine Wandverkleidung mit besonders geringer Bautiefe hergestellt werden. Die elektrische Flächenheizung ist bevorzugt auf eine Rückseite des Paneels geklebt. Die elektrische Heizeinrichtung bzw. Flächenheizung umfasst vorzugsweise eine Heizlage oder eine Heizmatte. Die Heizlage kann beispielsweise Papier und Kohlenstoffpartikel zur Erhöhung der Leitfähigkeit aufweisen. Die Heizlage kann laminiert sein und eine Heizfolie bilden. Die Heizlage kann laminiert sein, um den Stromfluss vor eindringenden Wasser zu schützen. Die Heizmatte kann ein Gewebe und/oder eine Vielzahl von drahtartigen elektrischen Leitern aufweisen.

Es ist zweckmäßig, dass die elektrische Heizeinrichtung zwei Pole aufweist. Wenigstens einer der beiden Pole kann durch ein Leitungsband hergestellt sein, welches sich mit seiner Längsausdehnung in Breitenrichtung oder Längsrichtung des Paneels erstreckt. Das Leitungsband kann jeweils an einem Längsende oder jeweils an einem breiten Ende angeordnet sein, sodass der Stromfluss sich über die gesamte Heizlage erstreckt. Gleiches mag für die Heizmatte gelten. Die elektrischen Anschlüsse können insbesondere an die Pole bzw. Leitungsbänder angeschlossen sein. Es ist möglich, dass die elektrische Heizeinrichtung bzw. die Flächenheizung bzw. die Heizlage bzw. die Heizmatte auf eine Rückseite des Paneels geklebt ist. Vorzugsweise ist eine Isolierschicht auf einer Rückseite der elektrischen Heizeinrichtung bzw. Flächenheizung aufgebracht. Es ist sehr bevorzugt, dass das Paneel mitsamt der elektrischen Heizeinrichtung an einer Wand der Nasszelle, beispielsweise mittels Baukleber, geklebt ist.

Gemäß einer bevorzugten Ausführungsform weist das Heizelement eine hydraulische Heizeinrichtung und insbesondere ein Rohr zur Führung eines beheizten Fluids auf. Dies bietet eine große Heizleistung. Gleichzeitig bedingt eine Wandverkleidung mit einer hydraulischen Heizeinrichtung eine größere Bautiefe. Eine Wandverkleidung mit einer hydraulischen Heizeinrichtung kann nicht ohne weiteres auf eine Wand einer Nasszelle geklebt werden. Die hydraulische Heizeinrichtung umfasst vorzugsweise wenigstens ein Wärmeleitelement. Das Wärmeleitelement umfasst bevorzugt wenigstens eine Rohraufnahme. Die Rohraufnahme ist im Querschnitt des Wärmeleitelements vorzugsweise U-förmig ausgebildet. Das wenigstens eine Wärmeleitelement kann zwei, drei oder mehr Rohraufnahmen aufweisen. Es ist von Vorteil, dass das wenigstens eine Wärmeleitelement das Rohr entlang einer Rückseite des Paneels führt. Es ist von Vorteil, wenn das Rohr wenigstens abschnittsweise gebogen und bevorzugt mäanderförmig auf der Rückseite des Paneels verläuft. Mit Vorteil umfasst das Wärmeleitelement wenigstens eine Anlagefläche zum Anlegen des Wärmeleitelements auf der Rückseite des Paneels. Mit Vorteil weist das Wärmeleitelement ein Metall und insbesondere Aluminium auf.

Nachfolgend wird die Erfindung anhand von mehreren Ausführungsbeispielen und mehreren Figuren erläutert. Es zeigen schematisch
- Fig. 1: eine perspektivische Ansicht eines ersten Ausführungsbeispiels einer erfindungsgemäßen Wandverkleidung,
- Fig. 2: die Fig. 1 mit vergrößerten Querschnitten von Eckbereichen der Wandverkleidung,
- Fig. 3: eine perspektivische Rückansicht eines zweiten Ausführungsbeispiels einer erfindungsgemäßen Wandverkleidung,
- Fig. 4A: eine Rückansicht des Ausführungsbeispiels aus Fig. 3 mit einem ersten Heizelement,
- Fig. 4B: eine Rückansicht der Wandverkleidung aus Fig. 3 mit einem zweiten Heizelement und
- Fig. 5: eine Explosionsdarstellung eines Paneels einer erfindungsgemäßen Wandverkleidung.

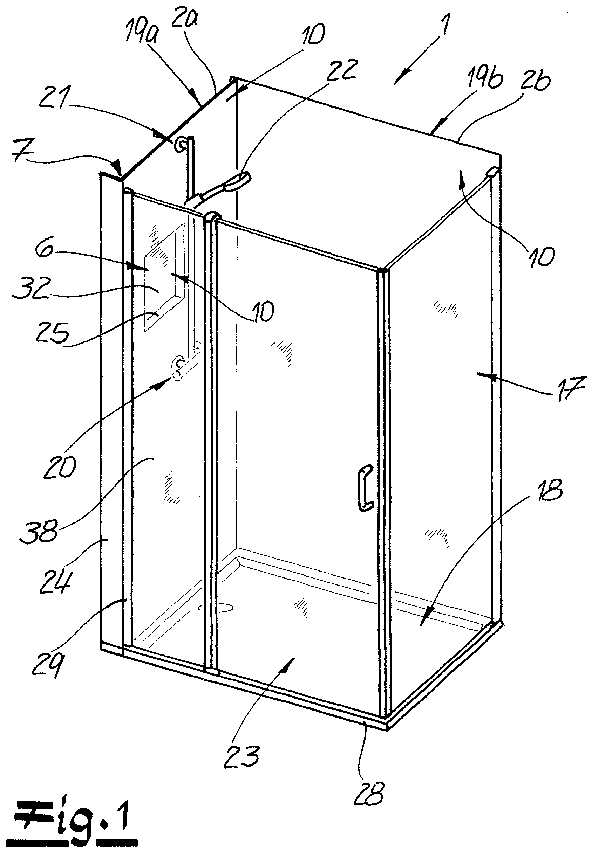

In Fig. 1 ist ein erstes Ausführungsbeispiel einer erfindungsgemäßen Wandverkleidung 1 gezeigt. Die Wandverkleidung 1 dieses Ausführungsbeispiels ist in einer Ecke einer Nasszelle in Form eines Badezimmers installiert und in eine Dusche integriert. Die Dusche umfasst bevorzugt eine Duschkabine, die ihrerseits zweckmäßigerweise eine Duschwand 17, eine bevorzugte Duschtür 23 sowie einen Duschboden 18 aufweist. Der Duschboden 18 wird an seinen Seiten vorteilhafterweise von einer Duschbodenleiste 28 entlang der Duschwand 17 und der Duschtür 23 abgeschlossen. Die Dusche dieses Ausführungsbeispiels umfasst außerdem eine Duscharmatur 20, eine Wandhalterung 21 und einen Duschkopf 22. Die Wandhalterung 21 und die Duscharmatur 20 mögen eine Duschstange halten, über welche der Duschkopf 22 höhenverstellbar ist.

Die Wandverkleidung 1 dieses Ausführungsbeispiels umfasst gemäß Fig. 1 eine erste Seitenwand 19a sowie eine zweite Seitenwand 19b. Die erste Seitenwand 19a ist in diesem Ausführungsbeispiel der Duscharmatur 20 zugeordnet. Die zweite Seitenwand 19b dieses Ausführungsbeispiels kann in einem Winkel zu der ersten Seitenwand 19a angeordnet sein, sodass die Wandverkleidung 1 zwei Seiten der Dusche ausbildet und vorzugsweise in einer Ecke der Nasszelle angeordnet ist. Es ist bevorzugt, dass die Duschwand 17 und die Duschtür 23 die Wandverkleidung 1 dieses Ausführungsbeispiels zu einer geschlossenen Duschkabine komplettieren.

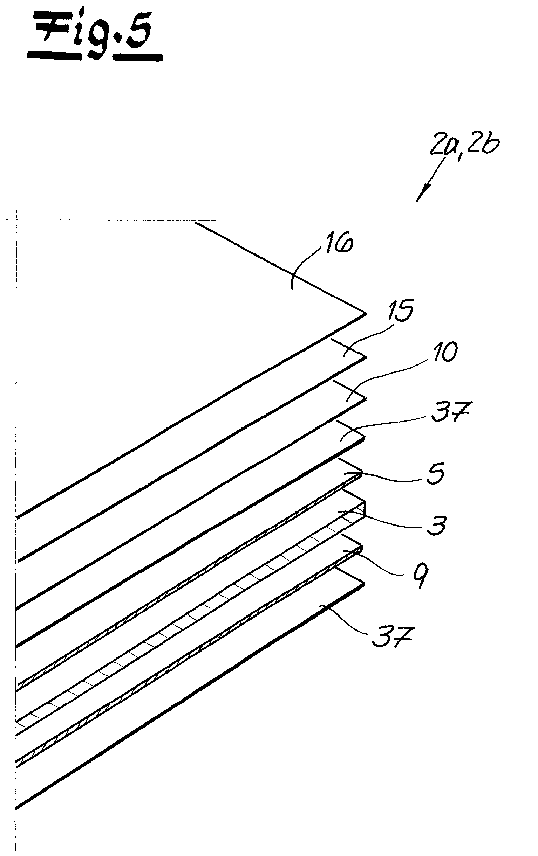

In diesem Ausführungsbeispiel weist die erste Seitenwand 19a ein erstes Paneel 2a auf, s. Fig. 1. Zweckmäßigerweise umfasst die zweite Seitenwand 19b ein zweites Paneel 2b. Beide Paneele sind auf ihrer raumeinwärtigen Seite mit einer Dekorschicht 10 versehen, welche einen individuellen und großformatigen, vom Besitzer oder Eigentümer der Dusche vorgegebenen Digitaldruck aufweisen kann. Die Dekorschicht 10 ist bevorzugt mit wenigstens einer darüber liegenden Schicht 15, 16 geschützt, vgl. auch Figur 5.

Gemäß Fig. 1 umfasst die erste Seitenwand 19a vorzugsweise einen Seitenflügel 24 sowie einen Hauptabschnitt 38. Der Seitenflügel 24 stellt bevorzugt eine Verlängerung der Duschwand 17 bis zu einer nicht dargestellten Wandoberfläche dar. Der Hauptabschnitt 38 ist mit Vorteil rechtwinklig zum Seitenflügel 24 angeordnet und verläuft bevorzugt parallel zu einer Wand der Nasszelle. In diesem Ausführungsbeispiel ist der Seitenflügel 24 durch eine Knickkante 7 des ersten Paneels 2a hergestellt. Hierzu ist vorteilhafterweise eine Nut in die Rückseite des ersten Paneels 2a eingebracht, welche die Knickkante 7 definiert.

Die erste Seitenwand 19a bzw. das erste Paneel 2a bzw. der Hauptabschnitt 38 kann ausweislich Fig. 1 eine Nische 6 zur Aufnahme von kosmetischen Produkten aufweisen. Eine Tiefe der Nische 6 ist vorzugsweise kleiner als Ausdehnung des Seitenflügels 24 in einer Draufsicht. Die Nische 6 weist insbesondere einen Nischenboden 25 auf, auf welchem die kosmetischen Produkte abgestellt werden können. Die Nische 6 umfasst zweckmäßigerweise eine Nischenrückwand 32, welche in diesem Ausführungsbeispiel ebenso mit einer Dekorschicht 10 wie der Hauptabschnitt 38 versehen ist.

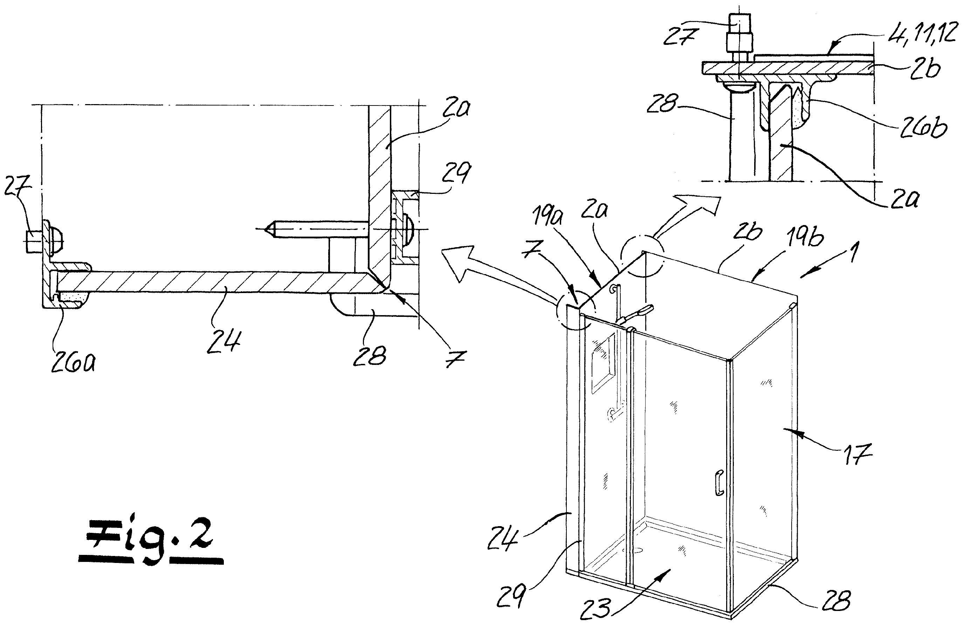

In Fig. 2 sind die beiden Eckbereiche des ersten Paneels 2a im Querschnitt vergrößert. Das erste Paneel 2a ist mehrschichtig aufgebaut, wobei allerdings die Schichten zwecks Übersichtlichkeit erst in Fig. 5 dargestellt sind. Der Seitenflügel 24 ist gemäß der Vergrößerung des Querschnitts an einem der Knickkante 7 gegenüberliegenden Ende vorteilhafterweise mittels eines ersten Befestigungselements 26a - bevorzugt in Form eines Paneelprofils - und einer dazugehörigen Profilbefestigung 27 - bevorzugt in Form einer Schraubverbindung - mit einer ersten Wand der Nasszelle verbunden. Die Knickkante 7 dieses Ausführungsbeispiels wurde vorzugsweise mittels Einarbeitung einer V-förmigen Nut in der Rückseite des ersten Paneels 2a eingearbeitet.

In dieser Vergrößerung aus Fig. 2 ist außerdem noch die Duschbodenleiste 28 zu erkennen, welche sich unterhalb des ersten Paneels 2a befinden kann. Die Duschwand 17 dieses Ausführungsbeispiels umfasst einen herkömmlichen Duschwandabschluss 29, welcher profilförmig ausgebildet ist, eine Glasscheibe der Duschwand 17 in sich aufnimmt und beispielsweise mittels einer Schraubverbindung am ersten Paneel 2a fixiert ist.

In dem zweiten Eckbereich des ersten Paneels 2a ist ausweislich Fig. 2 vorzugsweise ein zweites Befestigungselement 26b - bevorzugt in Form eines zweiten Paneelprofils - angeordnet. Das zweite Befestigungselement 26b ist vorzugsweise mittels einer Profilbefestigung 27 - bevorzugt in Form einer Schraubverbindung - mit einer zweiten Wand der Nasszelle verbunden.

Im vergrößerten Querschnitt des zweiten Eckbereichs ist in Fig. 2 zu erkennen, dass die Wandverkleidung 1 bzw. die zweite Seitenwand 19b mit Vorteil ein Heizelement 4, 11 umfasst. Das Heizelement 4 der zweiten Seitenwand 19b umfasst bevorzugt eine elektrische Heizeinrichtung 11, welche in diesem Ausführungsbeispiel eine elektrische Flächenheizung 12 umfasst. Die elektrische Flächenheizung 12 ist beispielsweise als Heizlage ausgebildet. Die Heizlage kann beispielsweise Graphit aufweisen, um eine gleichmäßige Wärmeerzeugung mittels elektrischem Widerstand über die Fläche zu gewährleisten. Die elektrische Heizeinrichtung 11 umfasst zweckmäßigerweise elektrische Anschlüsse, welche in Fig. 2 und auch in den anderen Figuren nicht dargestellt sind.

In dem Querschnitt des zweiten Eckbereichs ist gemäß Fig. 2 erkennbar, dass das erste Paneel 2a bevorzugt dicker ist als das zweite Paneel 2b. In diesem Ausführungsbeispiel weist das erste Paneel 2a eine Dicke bzw. Wandstärke von 6 mm auf. Das zweite Paneel 2b besitzt vorzugsweise eine Wandstärke von 3 mm. Die elektrische Flächenheizung 12 dieses Ausführungsbeispiels ist vorzugsweise ab Werk an dem zweiten Paneel 2b mittels Klebstoff befestigt.

Es ist bevorzugt, dass die zweite Seitenwand 19b - beispielsweise mittels herkömmlichem Baukleber - auf die zweite Wand der Nasszelle geklebt ist. Es ist möglich, dass zwischen der elektrischen Flächenheizung 12 und der zweiten Wand der Nasszelle noch eine in Fig. 2 nicht dargestellte Isolationsschicht befindlich ist, welche einen Klebeverbund mit der elektrischen Flächenheizung 12 und der zweiten Wand der Nasszelle bilden kann.

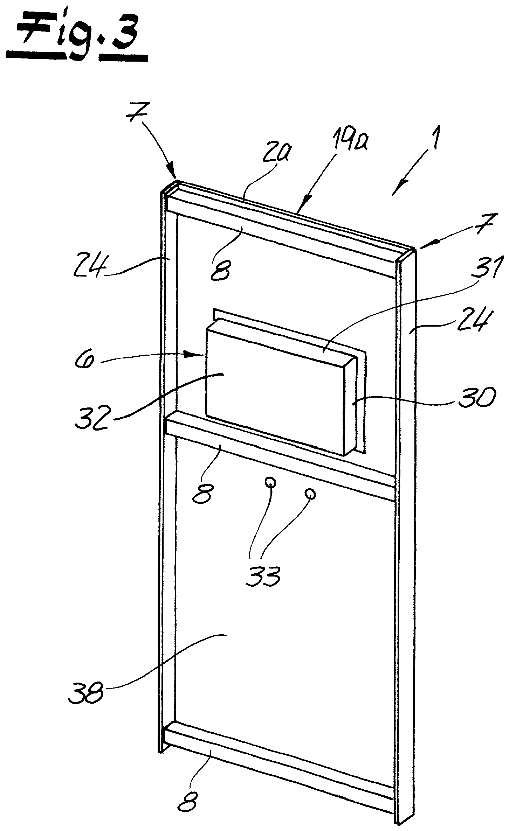

In Fig. 3 ist eine Rückseite eines zweiten Ausführungsbeispiels einer erfindungsgemäßen Wandverkleidung 1 abgebildet, wobei jedoch das Heizelement ausgeblendet ist. Dieses Ausführungsbeispiel umfasst im Gegensatz zum Ausführungsbeispiel der Fig. 1 und 2 einen zweiten Seitenflügel 24. Die Wandverkleidung 1 dieses zweiten Ausführungsbeispiels weist lediglich eine erste Seitenwand 19a auf. Die Wandverkleidung 1 umfasst vorzugsweise wenigstens einen bzw. zwei bzw. drei Abstandshalter 8.

Der wenigstens eine Abstandshalter 8 aus Fig. 3 weist mit Vorteil einen Kunststoff, insbesondere einen geschäumten Kunststoff und vorzugsweise ein Styropor auf. Der wenigstens eine Abstandshalter 8 umfasst zweckmäßigerweise eine raumeinwärts gewandte Fläche und eine raumauswärts gewandte Fläche. Bevorzugt sind die raumeinwärts gewandte Fläche und die raumauswärts gewandte Fläche zueinander wenigstens abschnittsweise parallel ausgebildet. Der Abstandshalter ist vorzugsweise über seinen Querschnitt hinweg in Breitenrichtung entlang von wenigstens 5 cm im Querschnitt bzw. in der Querschnittsfläche konstant ausgebildet. Die Querschnittsfläche ist bevorzugt wenigstens abschnittsweise in Breitenrichtung rechteckig ausgebildet. Es ist von Vorteil, dass sich der wenigstens eine Abstandshalter in seiner Längsausdehnung - bevorzugt in Breitenrichtung - wenigstens entlang eines Drittels und vorzugsweise entlang mindestens einer Hälfte der Ausdehnung des ersten Paneels 2a in Breitenrichtung erstreckt. Der wenigstens eine Abstandshalter 8 ist mit Vorteil an das erste Paneel 2a geklebt.

Es ist bevorzugt, dass eine Ausdehnung des wenigstens einen Abstandshalters 8 in Tiefenrichtung einer Ausdehnung des Seitenflügels 24 bzw. der Seitenflügel 24 in Tiefenrichtung entspricht, s. Fig. 3. Vorzugsweise entspricht eine Ausdehnung in Tiefenrichtung des mindestens einen Abstandshalters 8 in Tiefenrichtung einer Ausdehnung der Nische 6 in Tiefenrichtung. Bevorzugt entspricht eine Ausdehnung der Nische 6 in Tiefenrichtung einer Ausdehnung eines Seitenflügels 24 in Tiefenrichtung. Die Ausdehnung der Nische 6 in Tiefenrichtung wird zweckmäßigerweise durch den Nischenboden 25, Nischenseitenwänden 30 und/oder eine Nischendecke 31 definiert. Mit Vorteil umfasst das erste Paneel 2a bzw. der Hauptabschnitt 38 des ersten Paneels 2a wenigstens eine und vorzugsweise zwei Armaturöffnungen 33.

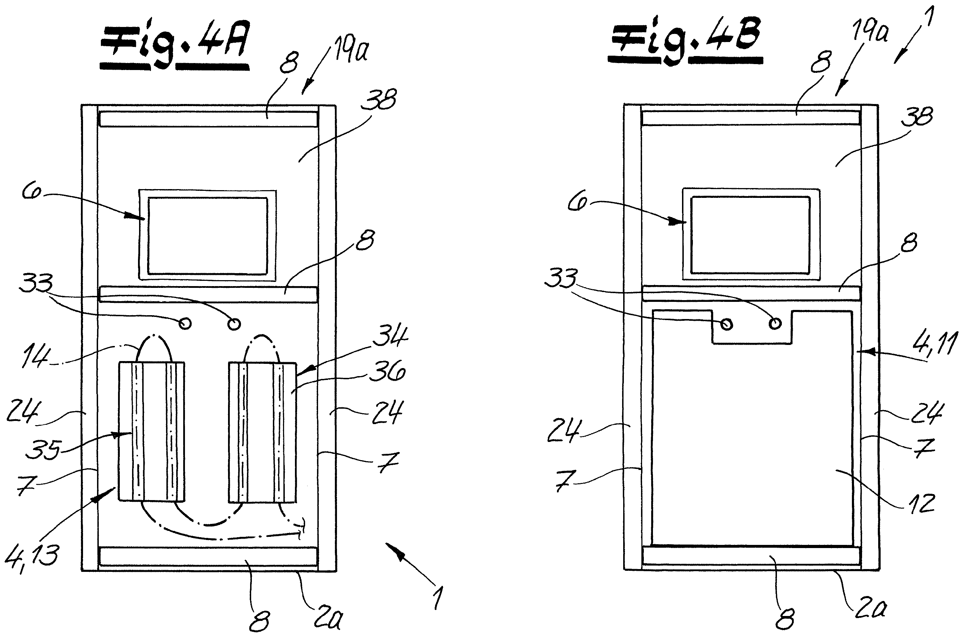

In Fig. 4A ist eine erste Variante des Ausführungsbeispiels aus Fig. 3 gezeigt, wobei hier das Heizelement 4 eingeblendet ist und die Seitenflügel 24 noch nicht umgeknickt sind. Das Heizelement 4 dieses Ausführungsbeispiels umfasst eine hydraulische Heizeinrichtung 13. Die hydraulische Heizeinrichtung 13 weist ein Rohr 14 auf, welches bevorzugt mäanderförmig auf der Rückseite der Wandverkleidung 1 bzw. des ersten Paneels 2a bzw. des Hauptabschnitts 38 verläuft. Die hydraulische Heizeinrichtung 13 weist vorzugsweise wenigstens ein Wärmeleitelement 34 auf, welches beispielsweise Aluminium umfasst.

Das wenigstens eine Wärmeleitelement 34 weist mit Vorteil wenigstens eine Anlagefläche 36 auf, welche beispielsweise mittels eines Klebers an der Rückseite des ersten Paneels 2a aus Fig. 4A befestigt ist. Es ist besonders bevorzugt, dass das wenigstens eine Wärmeleitelement 34 wenigstens eine Rohraufnahme 35 umfasst, entlang welcher das Rohr 14 wenigstens abschnittsweise geführt ist. Es bevorzugt, dass das Rohr 14 an der Rohraufnahme 35 des Wärmeleitelements 34 wenigstens abschnittsweise anliegt. Die Rohraufnahme 35 kann in einem Querschnitt gesehen U-förmig ausgebildet sein. Es ist bevorzugt, dass das wenigstens eine Wärmeleitelement auf seiner Rückseite eine Isolationsschicht aufweist. Die Isolationsschicht kann insbesondere einen Kunststoff und vorzugsweise einen geschäumten Kunststoff aufweisen.

In Fig. 4B ist eine zweite Variante des Ausführungsbeispiels aus Fig. 3 abgebildet, wobei das Heizelement 4 als elektrische Heizeinrichtung 11 ausgebildet ist. Die elektrische Heizeinrichtung 11 umfasst vorzugsweise eine elektrische Flächenheizung 12, welche als Heizlage oder als Heizmatte ausgebildet ist. Die elektrischen Anschlüsse sind in diesem Ausführungsbeispiel der Einfachheit halber nicht dargestellt. Es ist bevorzugt, dass der wenigstens eine Abstandshalter 8 an einem oberen Ende und/oder an einem unteren Ende des ersten Paneels 2a und/oder in Längs- bzw. Höhenrichtung zwischen dem Heizelement 4 und der Nische 6 angeordnet ist.

Es ist bevorzugt, dass sich eine Längsausdehnung des wenigstens einen Abstandshalters 8 in Breitenrichtung und waagerecht erstreckt, s. Fig. 4A und 4B. Es ist von Vorteil, dass das Heizelement 4, 11, 13 wenigstens abschnittsweise in Höhenrichtung zwischen der Nische 6 bzw. einem mittleren Abstandshalter 8 bzw. den Armaturöffnungen 33 und einen unteren Ende des ersten Paneels 2a angeordnet ist.

Es ist bevorzugt, dass sich das erste Paneel 2a der Fig. 4A und 4B über die gesamte Höhe einer hier nicht dargestellten Duschwand erstreckt. Zweckmäßigerweise ist das erste Paneel 2a entlang eines Längsschnitts einstückig ausgebildet. Vorzugsweise ist das Heizelement 4 lediglich in den unteren drei Vierteln bzw. in den unteren zwei Dritteln des ersten Paneels 2a angeordnet. Es ist möglich, dass sich die elektrische Flächenheizung 12 des zweiten Paneels 2b aus den Fig. 1 und 2 über die gesamte Länge bzw. Höhe des zweiten Paneels 2b erstreckt.

Ausweislich von Fig. 5 ist das erste Paneel 2a und/oder das zweite Paneel 2b mehrschichtig aufgebaut. Das Paneel 2a, 2b umfasst eine Trägerschicht 3, welche einen Kunststoff und insbesondere Polyethylen, bevorzugt LDPE umfasst. Die raumeinwärts der Trägerschicht 3 angeordnete Schutzschicht 5 umfasst vorzugsweise Aluminium und liegt bevorzugt an der Trägerschicht 3 an. Vorzugsweise umfasst das Paneel 2a, 2b eine raumauswärts der Trägerschicht 3 angeordnete Sicherungsschicht 9. Die Sicherungsschicht 9 liegt bevorzugt an der Trägerschicht 3 an und umfasst vorzugsweise Aluminium.

Vorzugsweise ist raumauswärts der Sicherungsschicht 9 eine Grundierungsschicht 37 aufgetragen, s. Fig. 5. Mit Vorteil ist raumeinwärts der Schutzschicht 5 eine Grundierungsschicht 37 aufgetragen. Es ist bevorzugt, dass raumeinwärts der Schutzschicht 5 eine/die Dekorschicht 10 aufgebracht ist. Es ist bevorzugt, dass die raumeinwärtige Grundierungsschicht 37 zwischen der Schutzschicht 5 und der Dekorschicht 10 angeordnet ist.

Die Dekorschicht 10 kann insbesondere einen Digitaldruck oder einen einfarbigen Lack aufweisen. Hinsichtlich der Wahl der Motive im Falle des Digitaldrucks sind der Kreativität nur wenige Grenzen gesetzt. Es ist bevorzugt, dass der Kunde über den Digitaldruck individuelle Motive auswählen kann. Vorzugsweise und gemäß Fig. 5 ist auf die Dekorschicht 10 eine Grundlackschicht 15 aufgetragen. Die Grundlackschicht 15 dient insbesondere der Abriebfestigkeit. Mit Vorteil umfasst das Paneel 2a, 2b eine Deckschicht 16. Die Deckschicht 16 kann insbesondere glänzende oder matte Oberflächen hervorrufen.

### Bezugszeichenliste

| | | | |
|---|---|---|---|
| 1 | Wandverkleidung | 26a | Erstes Befestigungselement für 2a |
| 2a | Erstes Paneel von 19a | | |
| 2b | Zweites Paneel von 19b | 26b | Zweites Befestigungselement für 2a |
| 3 | Trägerschicht | | |
| 4 | Heizelement | 27 | Fixierung von 26a, 26b |
| 5 | Schutzschicht | 28 | Duschbodenleiste |
| 6 | Nische | 29 | Duschwandabschluss |
| 7 | Knickkante | 30 | Nischenseitenwand |
| 8 | Abstandshalter | 31 | Nischendecke |
| 9 | Sicherungsschicht | 32 | Nischenrückwand |
| 10 | Dekorschicht | 33 | Armaturöffnung |
| 11 | elektrische Heizeinrichtung | 34 | Wärmeleitelement |
| 12 | elektrische Flächenheizung | 35 | Rohraufnahme |
| 13 | hydraulische Heizeinrichtung | 36 | Anlagefläche |
| 14 | Rohr | 37 | Grundierungsschicht |
| 15 | Grundlackschicht | 38 | Hauptabschnitt |
| 16 | Deckschicht | | |
| 17 | Duschwand | | |
| 18 | Duschboden | | |
| 19a | Erste Seitenwand von 1 | | |
| 19b | Zweite Seitenwand von 1 | | |
| 20 | Duscharmatur | | |
| 21 | Wandhalterung | | |
| 22 | Duschkopf | | |
| 23 | Duschtür | | |
| 24 | Seitenflügel | | |
| 25 | Nischenboden | | |

## Patentansprüche

1. Verwendung einer Wandverkleidung (1) in einer Nasszelle, wobei die Wandverkleidung (1) wenigstens ein Paneel (2a, 2b) umfasst, wobei das Paneel (2a, 2b) eine Trägerschicht (3) umfasst, wobei die Trägerschicht (3) einen Kunststoff aufweist, wobei die Wandverkleidung (1) ein Heizelement (4) umfasst, wobei das Paneel (2) wenigstens eine Schutzschicht (5) aufweist, wobei die Schutzschicht (5) raumeinwärts der Trägerschicht (3) angeordnet ist, wobei das Heizelement (4) an einer raumauswärtigen Seite des Paneels (2a, 2b) anliegt,
**dadurch gekennzeichnet, dass**
die Schutzschicht (5) ein Metall und insbesondere Aluminium umfasst.

2. Verwendung nach Anspruch 1, wobei die Nasszelle ein Badezimmer ist, wobei die Wandverkleidung (1) vorzugsweise in/an einer Sanitäranlage des Badezimmers und insbesondere in einer Dusche oder an einer Badewanne installiert ist.

3. Verwendung nach einem der Ansprüche 1 oder 2, wobei die Wandverkleidung (1) eine Nische (6) aufweist, wobei die Nische (6) in dem Paneel (2a) eingearbeitet ist, wobei die Nische (6) als Abstellplatz für kosmetische Produkte ausgebildet ist.

4. Verwendung nach einem der Ansprüche 1 bis 3, wobei die Wandverkleidung (1) wenigstens einen Seitenflügel (24) und einen Hauptabschnitt (38) umfasst.

5. Verwendung nach einem der Ansprüche 1 bis 4, wobei die Wandverkleidung (1) wenigstens einen Abstandshalter (8) zwischen dem Paneel (2a) und einer Oberfläche der Nasszelle aufweist.

6. Verwendung nach einem der Ansprüche 1 bis 5, wobei das Heizelement (4) in zwei unteren Dritteln bzw. einer unteren Hälfte bzw. einem unteren Drittel der Wandverkleidung (1) bzw. des Paneels (2a, 2b) angeordnet ist.

7. Verwendung nach einem der Ansprüche 1 bis 6, wobei die Wandverkleidung (1) bzw. das Paneel (2a, 2b) eine Länge von wenigstens 1,0 bzw. 1,2 bzw. 1,5 bzw. 1,7m aufweist.

8. Verwendung nach einem der Ansprüche 1 bis 7, wobei das Paneel (2) einstückig ausgebildet ist und vorzugsweise die Trägerschicht (3) entlang eines Querschnitts von einem unteren Ende des Paneels (2a, 2b) bis zu einem oberen Ende des Paneels (2a, 2b) einstückig und vorzugsweise integral ausgebildet ist.

9. Verwendung nach einem der Ansprüche 1 bis 8, wobei das Paneel (2a, 2b) eine Sicherungsschicht (9) umfasst, wobei die Sicherungsschicht (9) vorzugsweise ein Metall, insbesondere Aluminium, aufweist.

10. Verwendung nach einem der Ansprüche 1 bis 9, wobei die Wandverkleidung (1) ein Befestigungselement (26a, 26b) zur Befestigung des Paneels (2a) an einer Wand der Nasszelle aufweist, wobei das Befestigungselement (26a, 26b) als Paneelprofil ausgebildet ist.

11. Verwendung nach einem der Ansprüche 1 bis 10, wobei eine Schichtdicke der Trägerschicht (3) höchstens 20 bzw. 15 bzw. 10 mm beträgt.

12. Verwendung nach einem der Ansprüche 1 bis 11, wobei eine Schichtdicke der Schutzschicht (5) und/oder Sicherungsschicht (9) höchstens 2,0 bzw. 1,0 bzw. 0,5mm beträgt.

13. Verwendung nach einem der Ansprüche 1 bis 12, wobei das Paneel (2) eine Dekorschicht (10) aufweist, wobei die Dekorschicht (10) raumeinwärts der Schutzschicht (5) angeordnet ist, wobei die Dekorschicht (10) vorzugsweise einen Farbdruck umfasst.

14. Verwendung nach einem der Ansprüche 1 bis 13, wobei das Heizelement (4) eine elektrische Heizeinrichtung (11) und insbesondere eine elektrische Flächenheizung (12) umfasst.

15. Verwendung nach einem der Ansprüche 1 bis 14, wobei das Heizelement (4) eine hydraulische Heizeinrichtung (13) und insbesondere ein Rohr (14) zur Führung eines beheizten Fluids umfasst.
